(19) Europäisches Patentamt
European Patent Office
Office européen des brevets

(11) EP 1 298 459 A2

(12) **EUROPEAN PATENT APPLICATION**

(43) Date of publication:
02.04.2003 Bulletin 2003/14

(51) Int Cl.7: **G02B 3/04**

(21) Application number: 02021802.0

(22) Date of filing: 26.09.2002

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: 27.09.2001 JP 2001296820

(71) Applicant: **MATSUSHITA ELECTRIC INDUSTRIAL CO., LTD.**
**Kadoma-shi, Osaka 571-8501 (JP)**

(72) Inventors:
• **Itoh, Nobuki**
  **Kitakatsuragi-gun, Nara 635-0833 (JP)**
• **Tojo, Masaaki**
  **Kitakatsuragi-gun, Nara 635-0833 (JP)**
• **Morioka, Kazuo**
  **Katano-shi, Osaka 576-0052 (JP)**

(74) Representative: **Grünecker, Kinkeldey,**
**Stockmair & Schwanhäusser Anwaltssozietät**
**Maximilianstrasse 58**
**80538 München (DE)**

(54) **Aspherical rod lens and method of manufacturing aspherical rod lens**

(57)    An aspherical rod lens that converts light emitted from a predetermined light source or an emittance end of an optical fiber into predetermined light, the aspherical rod lens has

a first surface having either a spherical surface or a flat surface with which either the light source or the emittance end is in contact; and

a second surface that substantially opposes the first surface, the second surface having an aspherical shape through which the light emitted from either the light source or the optical fiber passes, the second surface converting the light into either collimated light or a converged light beam.

Fig. 1

**Description**

BACKGROUND OF THE INVENTION

Field of the Invention

The present invention relates to an aspherical rod lens and a method of manufacturing an aspherical rod lens employed in optical coupling systems used in optical communications and an optical circuit package to convert an outgoing beam emitted from a light source, an optical fiber, or an optical waveguide into parallel rays or convergent rays , or to converge a light beam to couple the converged light beam into an optical fiber or an optical waveguide.

Description of the Related Art

The need for very small lenses such as microlens has increased rapidly in optical communications and micro-optics to efficiently couple light between optical elements such as laser diodes, optical fibers, optical waveguides, photo diodes , and optical switches.

The optical coupling system for an optical system in which an image is formed on an optical axis is classified into two categories: a coupling system that couples a light source and an optical fiber and a coupling system that couples an optical fiber and an optical fiber. The optical coupling system between optical fibers employs a collimating optical system in which the light emitted from a light source and an optical fiber is converted into parallel rays (collimated light) by a lens, then passes through optical elements such as a wavelength filter and an optical isolator, and is again coupled into an optical fiber through another lens. In this system, an optical fiber collimator in which an optical fiber and a collimator lens are combined plays an important role.

Proposed lenses used in these two optical coupling systems include a gradient index lens (GRIN lens), spherical lens, aspherical lens, spherically-tipped fiber, flat surface gradient index lens, Fresnel lens, and combinations of these lenses.

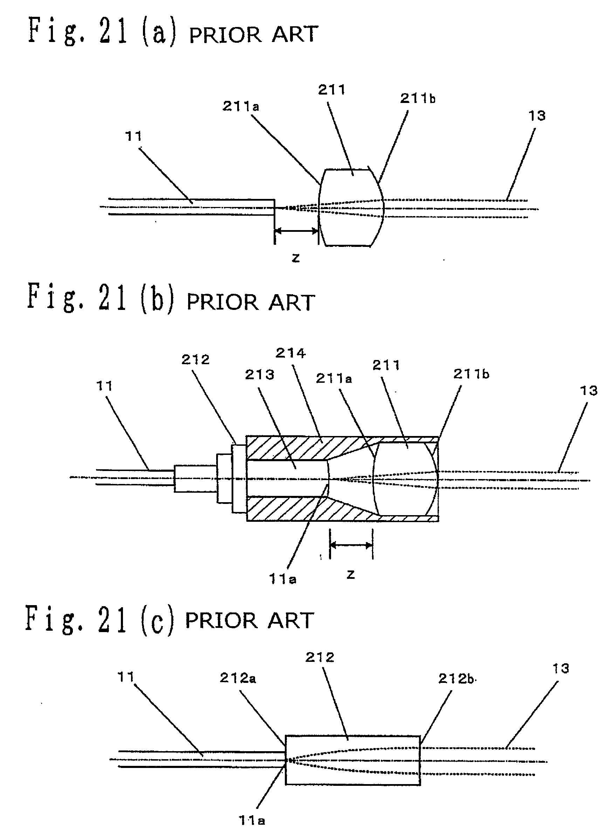

FIG. 21 (A) illustrates a conventional collimator lens. The light emitted from an optical fiber 11 enters a first surface (incidence surface) 211a of a double-convex lens 211, is transmitted through a lens medium, and is then refracted by a second surface (emittance surface) 211b into collimated light 13. A distance Z between an end surface 11a of the optical fiber and the first surface 211a of the double-convex lens 211 should be adjusted properly taking the optical characteristics of the double-convex lens 211 into consideration before good collimated light can be obtained, otherwise the collimated light 13 is obtained only over a short distance due to the fact that the light emitted from the optical fiber 11 converges or diverges.

Thus , if a well-collimated light beam cannot be obtained, the use of, for example, a collimating optical system (system for converting into parallel beam) cannot implement low- loss optical devices such as an optical splitter, optical demultiplexer, optical isolator, optical circulator, optical filter, and optical switch.

FIG. 21B illustrates an optical fiber collimator that is configured by using the collimator lens 211.

The optical fiber collimator shown in FIG. 21B includes a ferrule 213 to which the optical fiber 11 is fixedly bonded, the double-convex lens 211, and a collimator case 214 that fixedly holds the optical fiber 11 and the double-convex lens 211.

In order to obtain well-collimated light in this conventional art, a flange 212 of the ferrule 213 is used to butt-join the flange 212 of the ferrule 213 to the collimator case 214, thereby setting the distance Z between the incidence surface 211a of the lens and the end surface of the ferrule 213 to which the optical fiber 11 is fixed. Thus, the distance Z is fixed.

In this manner, the distance between the optical fiber and the lens is fixed to provide an optical fiber collimator that a double-convex lens having a certain refractive index emits collimated light.

Another known example of conventional optical beam collimator lens is one in which a piece of optical fiber is inserted into a recess formed in a molded lens (For example, Japanese Patent Application Laid-Open No. 7-49432 and Japanese Patent Application Laid-Open No. 63-58406). The entire disclosure of the descriptions in Japanese Patent Application Laid-Open No. 7-49432 and Japanese Patent Application Laid-Open No. 63-58406 are incorporated herein by reference in its entirety.

However, with the aforementioned conventional art, the distance between the end surface of an optical fiber and the incidence surface of a lens is not always a fixed value and good collimated light cannot be obtained due to the variations of length of the collimator case, the difference in the amount of polishing of the end surface of a ferrule, and the variations of the positioning of the lens.

In other words, a light beam converges or diverges with increasing distance from a lens, with the result that collimated light cannot be obtained over a long distance.

For this reason, when light is allowed to pass through a combination of an optical fiber and a lens to be collimated and is then transmitted through optical elements and then coupled through another lens into another optical fiber or when other collimated light is coupled into an optical fiber, the aforementioned collimator lens has a poor coupling effect which affects optical characteristics seriously.

FIG. 21C illustrates an optical fiber collimator using a GRIN lens (distributed refractive index lens).

The GRIN lens shown in FIG. 21C is a rod lens having distributed refractive index in radial directions passing through the optical axis and having a pitch of geometrical meander period of light in the lens of 0.25.

The GRIN lens having a pitch of 0.25 has a length such that the inverted image of an infinitely distant object is formed on the emittance surface and such that collimated light is led out when a point source is placed on the center of the incidence surface of the GRIN. The light emitted from the end surface of the optical fiber 11 is collimated by the GRIN lens 212 and emitted.

However, when an LD light source and an optical fiber are used, the light source is not necessarily a point source. Such a GRIN lens suffers from the problem that the beam diameter becomes larger with increasing distance from the light exiting surface 212b of the lens, thus failing to provide well-collimated light.

A glass material is shaped to provide a distributed refractive index by ion exchange, which is difficult to provide a low-cost rod lens.

A large number of such a lens (GRIN) is used in large quantities for various parts of optical communication network. Therefore, a reduction of manufacturing cost of the lens represents a large portion of the total reduction of cost of the entire optical communication network, and is a key factor in reducing the overall system cost.

SUMMARY OF THE INVENTION

The present invention was made in view of the drawbacks of the aforementioned conventional collimator lens. An object of the invention is to provide an aspherical rod lens and a method of manufacturing an aspherical rod lens. The aspherical rod lens can be used in optical communications and an optical circuit package and provides easy collimating of light beam and good converging efficiency. In other words, the aspherical rod lens can provide collimated light over a long distance and a convergent light beam optical system, implementing high coupling efficiency, low cost, high performance, and miniaturization of optical devices.

The 1st invention of the present invention is an aspherical rod lens that converts light emitted from a predetermined light source or an emittance end of an optical fiber into predetermined light, the aspherical rod lens comprising:

a first surface having either a spherical surface or a flat surface with which either the light source or the emittance end is in contact; and
a second surface that substantially opposes said first surface, said second surface having an aspherical shape through which the light emitted from either the light source or the optical fiber passes, said second surface converting the light into either collimated light or a converged light beam.

The 2nd invention of the present invention is the aspherical rod lens according to the 1st invention, wherein said first surface is in contact with the emittance end of the optical fiber and the light that has passed said second surface is the collimated light;
wherein the second surface has a focal point on said first surface at a position with which the emittance end is in contact.

The 3rd invention of the present invention is the aspherical rod lens according to the 1st invention, wherein said first surface is in contact with the emittance end of the optical fiber and the light that has passed said second surface is the converged beam;
wherein the second surface has a focal point located further inside of the rod lens than a position on said first surface with which the emittance end is in contact.

The 4th invention of the present invention is the aspherical rod lens according to the 2nd or 3rd invention,
wherein the aspherical rod lens is of a substantially cylindrical shape having a predetermined outer diameter which is substantially the same as a diameter of a ferrule that holds the optical fiber bonded to the ferrule.

The 5th invention of the present invention is a method of manufacturing an aspherical rod lens according to the 1st invntion, the method including:

a first stage in which a lens material is heated to a predetermined temperature at which the material has plasticity;
a second stage in which the heated lens material is formed into a lens shape under pressure by using a mold;
a third stage in which two lens surfaces are formed while pressurizing the lens material and cooling the lens material from the predetermined temperature to a transition point; and
a fourth stage in which the molded lens material is cooled to a temperature below the transition point.

The 6th invention of the present invention is an aspherical rod lens that converts light emitted from a predetermined light source or an emittance end of an optical fiber into predetermined light, the aspherical rod lens comprising:

a first surface having a guide hole into which either a plurality of the light sources or emittance ends of a plurality of the optical fibers should be inserted;
a second surface that substantially opposes said first surface, a second surface having an aspherical shape through which the light emitted either from the light sources or the optical fibers passes, said second surface converting the light into either collimated light or a converged light beam.

The 7th invention of the present invention is the aspherical rod lens according to the 6th invention, wherein the light that has passed said second surface is the collimated light;
wherein the second surface has a focal point substantially at a bottom of the guide hole.

The 8th invention of the present invention is the aspherical rod lens according to the 6th invention, wherein the light that has passed said second surface is the converged light;

wherein the second surface has a focal point positioned at a location further inside of the lens than a bottom of the guide hole.

The 9th invention of the present invention is the aspherical rod lens according to the 7th invention, wherein the guide hole is formed so that emittance ends of two parallel optical fibers are inserted into it to form a dual fiber collimator.

The 10th invention of the present invention is a method of manufacturing an aspherical rod lens according to the 6th invention, the method including:

a first stage in which a lens material is heated to a predetermined temperature at which the material has plasticity;
a second stage in which the heated lens material is shaped into a lens under pressure by using a mold;
a third stage in which two lens surfaces are formed while pressurizing the lens material and cooling the lens material from the predetermined temperature to a transition temperature; and
a fourth stage in which the molded lens material is cooled to a temperature below the transition temperature;

wherein the mold for forming the first surface has a projection for forms the guide hole.

The 11th invention of the present invention is the aspherical rod lens according to the 1st or 6th invention, wherein the contour of the aspherical rod lens is substantially in the shape of a cylinder and has a groove or a flat portion formed in a cylindrical surface of the cylindrical shape.

The 12th invention of the present invention is an outer surface aspherical rod lens according to the 1st or 6th invention, wherein the aspherical rod lens is substantially in the shape of a polygonal prism.

The 13th invention of the present invention is the method of manufacturing an aspherical rod lens according to the 5th or 10th invention, wherein the mold has a substantially circular cylindrical inner surface that corresponds to an outer surface of the aspherical rod lens, the circular cylindrical inner surface having a projection for forming a groove in the aspherical rod lens and a flat portion for forming a flat portion on the aspherical rod lens.

The 14th invention of the present invention is the method of manufacturing an aspherical rod lens according to the 5th or 10th invention, wherein the mold has a substantially polygonal prism that corresponds to an outer surface of the aspherical rod lens.

The 15th invention of the present invention is an aspherical rod lens that converts light emitted from either a predetermined light source or an emittance end of an optical fiber into predetermined light, the aspherical rod lens comprising:

a first surface upon which the light emitted from either the light source or the emittance end is incident, said first surface being at an inclination angle with a plane normal to an optical axis of the light incident upon said first surface;
a second surface having an aspherical shape through which the light incident upon said first surface passes, said second surface converting the light into either collimated light or a converged light beam and emitting either the collimated light or the converged light beam.

The 16th invention of the present invention is the aspherical rod lens according to the 15th invention, wherein said first surface is spaced apart from the emittance end of the optical fiber.

The 17th invention of the present invention is the aspherical rod lens according to the 16th invention, wherein the light emitted from said second surface is the collimated light and said second surface has a focal point located on the emittance end of the optical fiber.

The 18th invention of the present invention is the aspherical rod lens according to the 15th invention, wherein said first surface is in contact with the emittance end of the optical fiber.

The 19th invention of the present invention is the aspherical rod lens according to the 18th invention, wherein said first surface is either a spherical or aspherical, and the emittance end of the optical fiber is any one of (1) flat, (2) spherical, and (3) aspherical shapes, the emittance end of the optical fiber being inclined to correspond to the inclination angle.

The 20th invention of the present invention is the aspherical rod lens according to the 19th invention, wherein the light emitted from said second surface is the collimated light and said second surface has a focal point located on said first surface at a position where the emittance end contacts said first surface.

The 21st invention of the present invention is the aspherical rod lens according to the 19th invention, wherein the light emitted from said second surface is the converged light and said second surface has a focal point located further inside of the lens than said first surface.

The 22nd invention of the present invention is the aspherical rod lens according to the 15th invention, wherein the inclination angle is any one of 6 degrees, 8 degrees, and 12 degrees.

The 23rd invention of the present invention is a method of manufacturing an aspherical rod lens according to the 15th invention, including:

a first stage in which a lens material is heated to a predetermined temperature at which the material has plasticity;

a second stage in which the heated lens material is formed into a lens shape under pressure by using a mold;

a third stage in which two lens surfaces are formed while pressurizing the lens material and cooling the lens material from the predetermined temperature to a transition point; and

a fourth stage in which the molded lens material is cooled to a temperature below the transition point;

wherein the mold for forming the first surface being at an inclination angle with a plane normal to the optical axis.

The 24th invention of the present invention is the aspherical rod lens according to the 1st, 6th, or 15th invention, wherein a lens material of the aspherical rod lens has a same refractive index as a core of the optical fiber.

The 25th invention of the present invention is the aspherical rod lens according to the 1st, 6th, or 15th invention, wherein said first surface and said second surface of the aspherical rod lens are coated for anti-reflection.

The 26th invention of the present invention is the aspherical rod lens according to the 1st, 6th, or 15th invention, wherein the aspherical rod lens has a metal thin film applied to its outer surface.

The 27th invention of the present invention is the aspherical rod lens according to 1st, 6th, or 15th invention, wherein said second surface of the aspherical rod lens has a wavelength filter formed thereon.

The 28th invention of the present invention is the aspherical rod lens according to the 1st, 6th, or 15th invention, wherein a lens material of the aspherical rod lens is either a glass material or a resin material.

The 29th invention of the present invention is a method of manufacturing an aspherical rod lens, comprising the steps of:

a) positioning a glass rod in a blow mold, the blow mold including a first opening and a second opening opposite the first opening;

b) heating the glass rod above a predetermined temperature at which the glass rod becomes plastic;

c) sliding a first mold, having a first shaped end portion, into the first opening of the blow mold;

d) sliding a second mold, having a second shaped end portion, into the second opening of the blow mold, the second shaped end portion of the second mold having a concave aspherical shape;

e) compressing the heated glass rod between the first shaped end portion of the first mold and the second shaped end portion of the second mold and forming the aspherical rod lens; and

f) cooling the aspherical rod lens below the predetermined temperature, wherein:

the first shaped end portion of the first mold has a concave spherical shape or a flat surface.

The 30th invention of the present invention is a method of manufacturing an aspherical rod lens, comprising the steps of:

a) positioning a glass rod in a blow mold, the blow mold including a first opening and a second opening opposite the first opening;

b) heating the glass rod above a predetermined temperature at which the glass rod becomes plastic;

c) sliding a first mold, having a first shaped end portion, into the first opening of the blow mold;

d) sliding a second mold, having a second shaped end portion, into the second opening of the blow mold, the second shaped end portion of the second mold having a concave aspherical shape;

e) compressing the heated glass rod between the first shaped end portion of the first mold and the second shaped end portion of the second mold and forming the aspherical rod lens; and

f) cooling the aspherical rod lens below the predetermined temperature, wherein:

the first shaped end portion of the first mold has at least one projection; and

step (e) further includes the step of compressing the glass rod against the projection of the first shaped end portion of the first mold and forming at least one guide hole in the asperical rod lens.

The 31st invention of the present invention is the method of manufacturing an aspherical rod lens according to the 29th or 30th invention, wherein:

the interior surface of the blow mold includes a triangular or flat portion along a portion of the length of the interior surface; and

step (e) further includes the step of compressing the glass rod against the triangular or flat portion of the interior surface of the blow mold and forming an indicia on the asperical rod lens.

The 32nd invention of the present invention is the method of manufacturing an aspherical rod lens according to the 29th or 30th invention, wherein:

an interior surface of the blow mold has a polygonal prism shape with a predetermined polygon cross-section;

the first opening of the blow mold has the predetermined polygon shape; and

the second opening of the blow mold has the predetermined polygon shape.

The 33rd invention of the present invention is a method of manufacturing an aspherical rod lens, comprising the steps of:

a) positioning a glass rod in a blow mold, the blow mold including a first opening and a second opening opposite the first opening;

b) heating the glass rod above a predetermined temperature at which the glass rod becomes plastic;

c) sliding a first mold, having a first shaped end portion, into the first opening of the blow mold;

d) sliding a second mold, having a second shaped end portion, into the second opening of the blow mold, the second shaped end portion of the second mold having a concave aspherical shape;

e) compressing the heated glass rod between the first shaped end portion of the first mold and the second shaped end portion of the second mold and forming the aspherical rod lens; and

f) cooling the aspherical rod lens below the predetermined temperature, wherein:

the blow mold has a longitudinal axis corresponding to an optical axis of the aspherical rod lens; and

a normal of a surface of the first shaped end portion of the first mold forms a predetermined angle with the longitudinal axis of the blow mold.

BRIEF DESCRIPTION OF THE DRAWINGS

FIG. 1 illustrates an embodiment of an aspherical rod lens according to the present invention;

FIGS. 2A and 2B illustrate an embodiment of a method of manufacturing the aspherical rod lens according to the present invention;

FIG. 3 illustrates an embodiment of an aspherical rod lens according to the present invention;

FIG. 4 illustrates an embodiment of an aspherical rod lens according to the present invention;

FIG. 5 illustrates an embodiment of an aspherical rod lens according to the present invention;

FIGS. 6A to 6E illustrate an example of an aspherical rod lens according to the present invention;

FIGS. 7A and 7B illustrate an embodiment of an aspherical rod lens according to the present invention;

FIG. 7C is a perspective view of a dual fiber collimator according to the present invention;

FIGS. 8A and 8B illustrate an embodiment of a method of manufacturing an aspherical rod lens according to the present invention;

FIGS. 9A-9C illustrate an embodiment of an aspherical rod lens according to the present invention;

FIGS. 10A-10C illustrate an embodiment of a method of manufacturing an aspherical rod lens according to the present invention;

FIGS. 11A and 11B illustrate an embodiment of an aspherical rod lens according to the present invention;

FIGS. 12A-12C illustrate an embodiment of a method of manufacturing an aspherical rod lens according to the present invention;

FIGS. 13A and 13B illustrate an embodiment of an aspherical rod lens according to the present invention;

FIGS. 14A and 14B illustrate an embodiment of an aspherical rod lens according to the present invention;

FIGS. 15A-15C illustrate an embodiment of a method of manufacturing an aspherical rod lens according to the present invention;

FIGS. 16A-16E illustrate an embodiment of an aspherical rod lens according to the present invention;

FIG. 16F is an enlarged view of the contact portion of the fiber in FIG.16B;

FIGS. 17A and 17B illustrate an embodiment of a method of manufacturing an aspherical rod lens according to the present invention;

FIGS. 18A and 18B illustrate an embodiment of an aspherical rod lens according to the present invention;

FIGS. 19A and 19B illustrate the distance dependencies of insertion loss for different lenses;

FIGS. 20A-20C illustrate an embodiment of an aspherical rod lens according to the present invention; and

FIGS. 21A-21C illustrate a schematic diagram of an aspherical rod lens according to the conventional art.

Description of Symbols

11 Optical fiber
12, 31, 41, 51, 54, 61, 71, 91, 111 Aspherical rod lens
12a, 61a, 71a, 91a, 111a First surface
12b, 61b, 71b, 91b, 111b Second surface
13 Collimated light
14 Optical fiber on the emittance side
21, 81, 101, 121 Lens material
22, 82, 102, 122 Upper mold
23, 83, 103, 123 Lower mold
24, 84, 104, 124 Blow mold
25, 85, 105, 125 Spacer
32, 42 Ferrule
33, 43, 52, 55, 165 Capillary
44, 53, 56 Sleeve
57 Optically functioning element
61c, 62c, 63c, 64c, 71c Guide hole for guiding a single or a plurality of optical fibers

82a Index
91c Groove
92, 112 Fixing plate
104a Index
111c Flat portion
124a Flat portion
131 Rod lens in the shape of a quadrangular prism
132 Rod lens in the shape of a hexagonal prism
154 Blow mold
161, 162, 163 Aspherical rod lens
164 Ferrule polished obliquely
172 Upper mold
181 Aspherical rod lens for converging a light beam
183 Converged beam
191, 192, 201, 202, 203 Aspherical rod lens
201c AR coating
202c Metallized layer (covering layer of metal)
203c Wave length filter
211 Double-convex lens
212 Flange
213 Ferrule
214 Collimator case

## DETAILED DESCRIPTION OF THE PREFERRED EMBODIMENTS

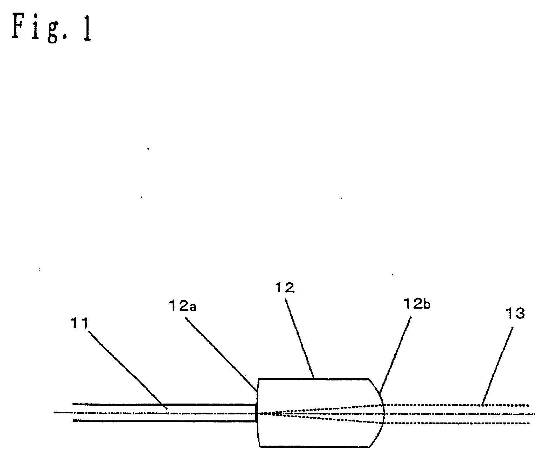

The embodiments of the invention will be described with reference to FIGS. 1-20.

(First embodiment)

FIG. 1 illustrates an embodiment of an aspherical rod lens according to the present invention. As shown in FIG. 1, an aspherical rod lens 12 of the invention is a collimator lens that converts light emitted from an optical fiber 11 into collimated light 13.

Referring to FIG. 1, the optical fiber 11 and the aspherical rod lens 12 are aligned in such a way that their optical axes are in line with each other. The aspherical rod lens 12 has a spherical first surface 12a upon which light is incident and an aspherical second surface 12b from which the light is emitted, the first surface and the second surface being in this order from the optical fiber 11.

The optical fiber 11 is usually in the form of a single mode optical fiber or a multi-mode optical fiber. In the embodiment in FIG. 1, the optical fiber 11 was a single mode optical fiber. The wave length of light usually transmitted through an optical fiber is in 850 nm band, 1310 nm band, and 1550 nm band. The light in 1310 nm band and 1550 nm band are used in optical communication systems. The light used in the embodiment is in 1550 nm band.

The lens material is an optical glass. The optical glass used in the embodiment has a refractive index in the range of 1.46 to 1.48, which is close to that of the core of a single mode optical fiber. The lens has a diameter of 2.5 mm and a length of 4.5 mm. The first surface is a spherical surface having a radius of 20 mm and the second surface is an aspherical lens.

The aspherical rod lens operates as follows: The light emitted from the end surface of the optical fiber 11 enters the first surface 12a of the aspherical rod lens 12, transmits through the lens medium, and is then refracted by the second surface 12b so that the light is converted into collimated light 13. Because of the aspherical second surface, when the optical fiber 11 abuts the first surface, the aspherical second surface 12b provides the collimated light 13 having no aberration. The beam produced by the aspherical rod lens according to the invention had a diameter of about 340 μm.

With the aspherical rod lens 12 where the second surface 12b is aspherical and the focal point of the second surface 12b is located on the first surface 12a, the collimated light 13 can be produced by merely positioning the optical fiber 11 to abut the second surface. The second surface is designed to be aspherical taking into account spread angle from the optical fiber, so that well-collimated light can be obtained without adverse effects caused by aberration that would otherwise occur in the lens. Especially, the second surface has a smaller radius of curvature than the first surface. If the second surface has an ordinary spherical surface, a large adverse effect of aberration appears and is detrimental to the production of collimated light.

As is indicated by Equation (1), the second surface is designed to be an aspherical shape in which terms of high orders such as the term raised to the 4th power and the term raised to the 6th power are added to a hyperboloidal shape. The aspherical shape is expressed by a general equation, i.e., Equation 1.

[Equation 1]

$$Z = \frac{C \cdot h^2}{1 + \sqrt{\{1-(K+1) \cdot C^2 \cdot h^2\}}} + A \cdot h^4 + B \cdot h^6 + C \cdot h^8 + \cdots$$

Here, h is given by $h = \sqrt{x^2 + y^2}$. Parameters in Equation (1) are as follows:

x and y are coordinates in directions perpendicular to the optical axis, z is a coordinate in the direction of optical axis, C is a radius of curvature, K is conic constant, A is the term raised to the 4th power, B is the term raised to the 6th power, and C is the term raised to the 8th power.

If K=0, the surface is spherical. If K>0, the surface is an ellipsoidal surface having an optical axis in line with a minor axis. If -1<K<0, the surface is an ellipsoidal surface having an optical axis in line with on a major axis. If K=-1, the surface is a parabolic surface. If K<-1, the surface is a hyperboloid. On the basis of the spot size and the spread angle of an optical fiber and a light source, the refractive index and thickness (length in the optical axis) of a lens material, the diameter of a desired light beam and the parameters for an optimum aspherical shape are determined by simulation taking the wavelength of light used into account. A curved surface of a second order that serves as a reference is determined by the radius of curvature C and the conic constant K. The aspherical shape can still be formed even if the coefficients A, B, and C of polynomials are not finite values.

The advantages of the spherical first surface according to the embodiment will now be described. Usually, optical fibers are fixed in a ferrule or a capillary in an optical connector. An optical connector is a component that readily connects an optical fiber to another optical fiber or equipment. A ferrule used for such a purpose is a type of optical connector that holds the end surface of an optical fiber. The ferrule provides accurate alignment of the optical fiber with the end surface of a mating optical fiber held by a ferrule, or with a lens. For a single mode optical fiber, the ferrule is required to butt-join the two optical fibers so that when optical connectors are connected to each other, the cross-sections (about 9 $\mu$m $\phi$) of the two optical fibers are accurately registered with each other under a predetermined pressure.

Light transmitted within an optical fiber is reflected by the end surface of the optical fiber when the light is emitted from the optical fiber into another medium. Surface finishing of the end surface of an optical fiber determines light loss due to reflection, i,e., return loss (backward reflection). Return loss is given by the ratio of light Pi that propagates from a ferrule or a connector to the next medium and light Pr that is reflected by the end surface of the ferrule or the optical connector and returns to the light source, i.e., return loss = - 10 $\times$ log (Pr/Pi) in dB. For example, a return loss of 50 dB means that only a 1/100,000 of the total power returns .

As large an absolute value of return loss as possible is a very important factor in high speed optical communication systems. A narrow band light source such as a DFB laser used in high speed optical communication systems is apt to encounter mode hopping and fluctuation in output power. Thus, return loss should be reduced as much as possible. For this reason, optical fibers require to be connected by means of PC (physical contact) where the end surface of the ferrule is made into a convex spherical surface so that the cores of the optical fibers are in intimate contact with each other to reduce Fresnel reflection.

In the present embodiment, the first surface was formed into a spherical surface having a radius 20 mm, thereby facilitating easy physical contact of the optical fiber fixed to the ferrule with the first surface.

This structure offered a special advantage of reducing reflected light return. The first surface need not be a spherical surface having a radius of 20 mm as long as physical contact can be made. In other words, radii of, for example, 10 mm and 30 mm also offer an advantage of reducing reflected light return.

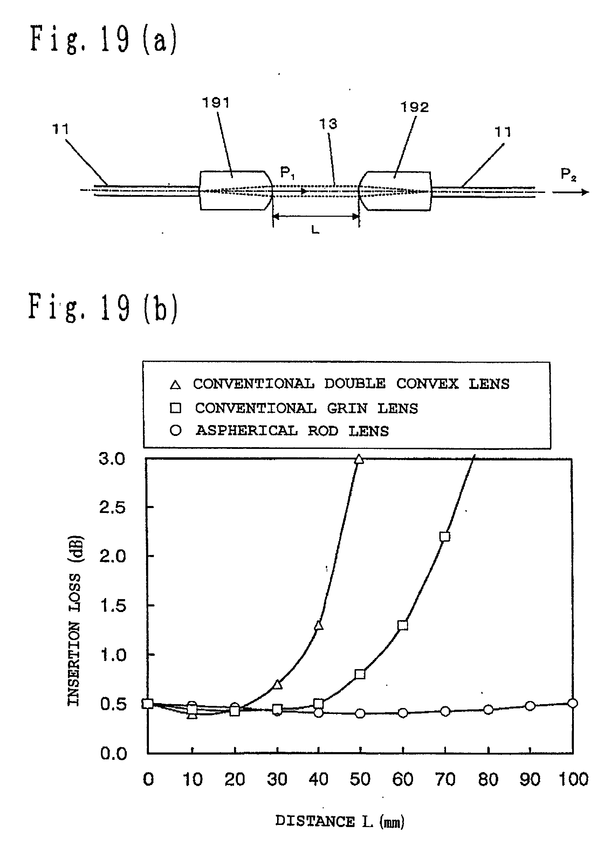

FIGS. 19A and 19B illustrate insertion losses measured by using an aspherical rod lens according to the embodiment.

FIG. 19A illustrates a setup for measurement. The light emitted from the optical fiber 11 is collimated by an aspherical rod lens 191.

The collimated light is received by an aspherical rod lens 192, which is positioned in a back-to-back relation with the aspherical rod lens 191 positioned on the incidence side, and coupled to the optical fiber 11 on the light-emitting side. The insertion loss is calculated by -10 log(P1/P2) where P1 is light power emitted from the aspherical rod lens 191 and P2 is light power finally emitted.

In other words, insertion loss is an increase in light loss that occurs in an optical transmission line when optical components such as an optical connector is inserted into the transmission line or optical components are spaced apart. Thus, insertion loss should be preferably as small as possible.

FIG. 19B illustrates measured losses for a conventional double convex lens (symbol $\triangle$), a GRIN lens (symbol $\square$), and an aspherical rod lens (symbol $\bigcirc$).

As is clear from FIG. 19B, the aspherical rod lens provides a collimator that provides good parallel rays while still not increasing insertion loss over a long distance.

The boundary where light paths are connected will now be described. Generally, the reflectivity R at the boundary between two mediums having refractive indices of n1 and n2, respectively, is expressed by Equation 2.

$$[\text{Equation 2}]$$

$$R = \left( \frac{n_1 - n_2}{n_1 + n_2} \right)$$

Thus , an interface having a large difference in refractive index causes a large reflectivity. One way of reducing reflectivity at the boundary is to apply anti-reflection coating (AR coating) in the form of a dielectric multi-layer to decrease reflectivity. In the present embodiment, the first surface may be flat so that the lens is an aspherical rod lens. However, applying an anti-reflection coating to the optical fiber 11 on the incidence side and the first surface and to the optical fiber 14 on the emittance side and the second surface reduced the reflectivity and therefore light return.

The glass material employed in the embodiment is one of those having a refractive indices close to that of the core material of a single mode optical fiber. If a single mode optical fiber is butt-joined to the aspherical rod lens according to the embodiment, the reflectivity R due to a difference in refractive index decreases. In other words, if the optical material (here lens material) that is connected to an optical fiber has a refractive index close to that of the core material of the optical fiber, optical connection with low reflectivity may be possible without an AR coating, and the resulting system is of low cost.

(Second embodiment)

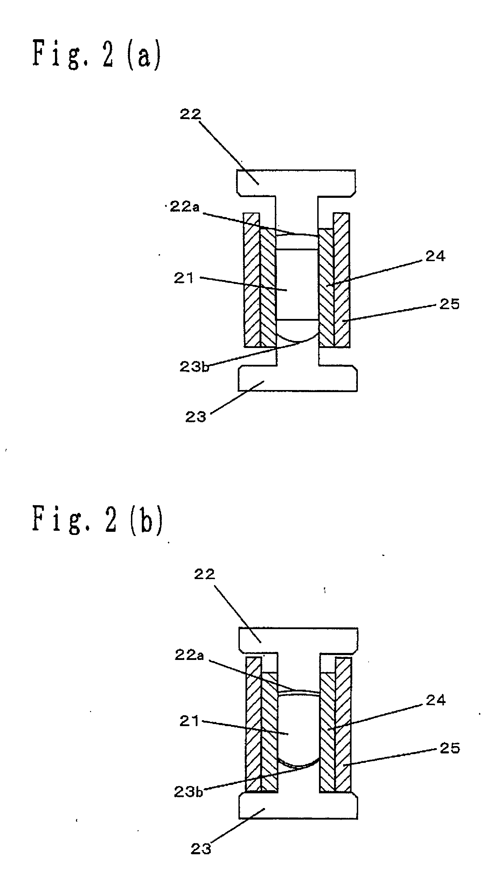

A method of manufacturing the aspherical rod lens according to the first embodiment will be described with reference to figures. FIGS. 2A and 2B illustrate manufacturing stages of the aspherical rod lens.

As shown in FIGS. 2A and 2B, the method of manufacturing an aspherical rod lens includes first to fifth stages. At the first stage, a lens material 21 in the form of glass is positioned by a blow mold 24, an upper mold 22, and a lower mold 23 in place. The blow mold 24 is made of tungsten carbide and controls the optical axis of the lens material 21. The upper and lower molds 22 and 23 are also made of tungsten carbide . The lens material 21 is heated to a temperature at which the glass has plasticity. At the second stage, the heated lens material 21 is formed into a lens shape under pressure by using the upper mold 22 and the lower mold 23.

At the third stage, the lens material 21 is shaped under pressure while also being cooled from the predetermined temperature at which the glass material has plasticity to a glass transition point. At the third stage, a spacer 25 is used to control the parallelism between the upper mold 22 and lower mold 23 and the thickness of the lens material 21. At the fourth stage, the molded lens material 21 is cooled to a temperature below the glass transition point.

The second embodiment is characterized in that a portion 22a of the upper mold 22 for shaping the first surface of the aspherical rod lens has a spherical or flat surface and a portion 23b of the lower mold 23 for shaping the second surface has an aspherical surface. Especially, it is important that the portion 23b is designed to have an accurately aspherical shape.

As described above, according to the method of manufacturing an aspherical rod lens, precision molding allows an aspherical shape of the mold to be transferred precisely with good repeatability. Thus, an aspherical rod lens can be mass-produced at very low cost.

(Third embodiment)

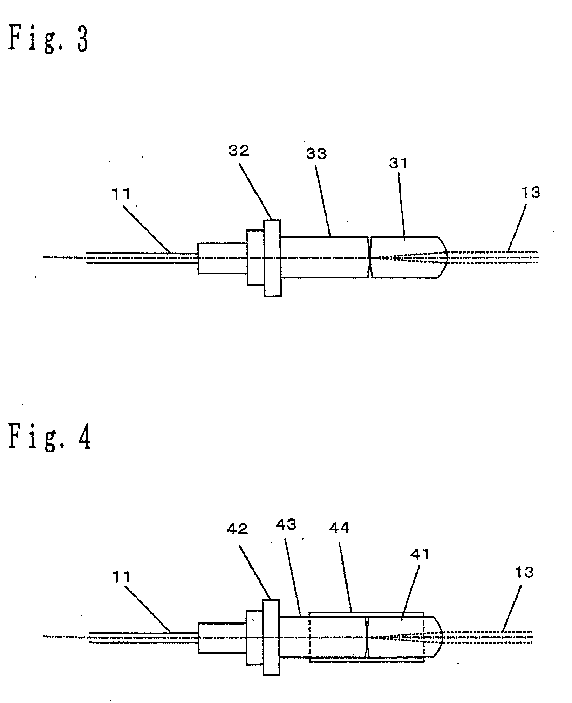

FIG. 3 illustrates an embodiment of an aspherical rod lens according to the invention.

An aspherical rod lens 31 in FIG. 3 is characterized in that an aspherical rod lens 31 has the same diameter as a capillary 33 of a ferrule 32 that holds optical fibers.

The lens having the same diameter as the capillary 33 of the ferrule 32 makes an assembly operation efficient when an optical device is manufactured. The capillary used for ferrule includes, for example, a capillary having a diameter of 2.5 mm that are used for a SC connector and an FC connector, or a capillary having a diameter of 1.25 mm that is used for an MU connector and an LC connector.

In the third embodiment, aspherical rod lenses had diameters of 2.5 mmand 1.25 mm depending on the size of capillary. The aspherical rod lens was easy to fix on, for example, a slitting sleeve and a ceramic sleeve, particularly reducing assembly cost.

Specifically, as shown in FIG. 4, an aspherical rod lens 41 has the same diameter as a capillary 43 of a ferrule 42 and a slitting sleeve 44 is used to hold the lens 41 and capillary 43 together. Holding the aspherical rod lens 41 and the ferrule 42 together by means of the slitting sleeve 44 allows the optical axis of the optical fiber 11 to be in line with the optical axis of the lens 41, and provides well-collimated light over a longer distance.

Here, the diameter of the aspherical rod lens was made the same as the diameter of 1.25 mm of the capillary 43 of the ferrule 42 for an MU connector.

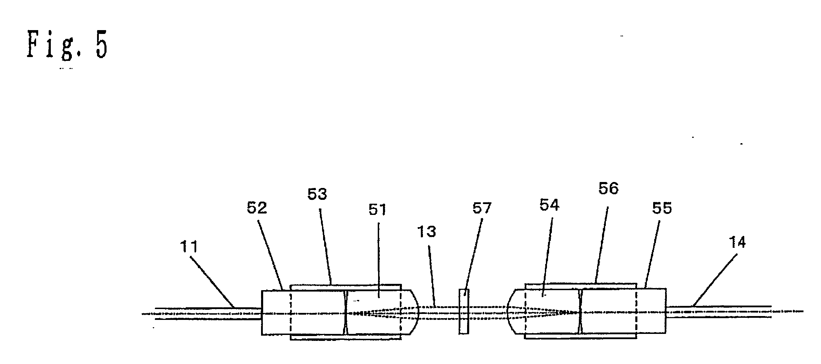

An optically functioning device configured by using a collimator optical system will be described with reference to FIG. 5. FIG. 5 illustrates an optical functioning device in which the optical fiber 11, an optically functioning element 57, and the optical fiber 14 are coupled via a lens. The optically functioning device includes the optical fiber 11 on the incidence side, a capillary 52 for supporting the optical fiber 11, an aspherical collimator lens 51, a sleeve 53, an optically functioning element 57, an aspherical collimator lens 54 for gathering light, a capillary 55, a sleeve 56, and the optical fiber 14 on the emittance side.

The operation of the optically functioning device in FIG. 5 will be described. The light emitted from the optical fiber 11 held by the capillary 52 is converted by the aspherical rod lens 51 into the collimated light 13. The collimated light enters the aspherical rod lens 54 on the light receiving side through an optically functioning element 57. The collimated light that entered the aspherical rod lens 54 is coupled into the optical fiber 11 fixed in the capillary 55 on the light emittance side.

In the collimating optical coupling system according to the third embodiment, the distance between lenses was set to 5 mm. The aspherical rod lens according to the invention provided a collimating optical coupling system that has a high coupling efficiency over an even longer distance, e.g., 100 mm for optical switch, and the results are shown in FIG. 19. The insertion loss for a distance of 100 mm was 0.5 dB.

While the third embodiment has been described with respect to an aspherical rod lens that is configured to the capillary for a 25 mm-MU ferrule, the aspherical rod lens can be made to have not only diameters of 2.5 mm and 1.25 mm which are the outer sizes of the capillary for a ferrule but also diameters less than 1.0 mm, e.g., 1.0 mm or 0.5 mm, in accordance with the diameters of 1.8 mm and 1.4 mm which are the outer sizes of capillaries used for assembling optically functioning devices and in accordance with the diameters of micro-capillaries having even smaller diameters. The aspherical rod lens according to the invention could implement a collimator optical system having a high coupling efficiency also when the aspherical rod lens was combined with optical fibers fixed to these capillaries.

(Fourth embodiment)

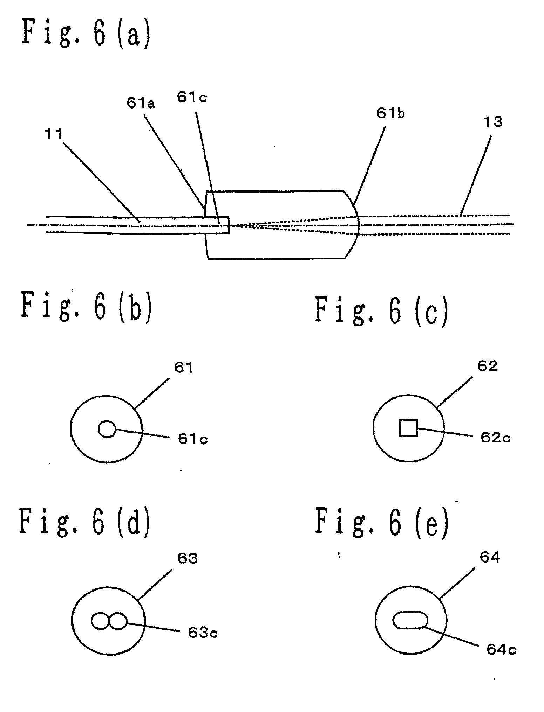

FIGS. 6A-6E illustrate an embodiment of an aspherical rod lens according to the present invention and modifications of the embodiment.

An aspherical rod lens 61 includes a first surface 61a, a second surface 61b, and a guide hole 61c for guiding an optical fiber.

In other words, the aspherical rod lens has a guide hole 61c having a recess formed by molding. This aspherical rod lens is a highly miniaturized micro lens having a diameter of 1 mm and a length of 3 mm. The diameter of guide hole is about 125 microns or 250 microns so that the bare optical fiber can be inserted into the guide hole.

The center of the guide hole 61c is on the optical axis of the aspherical rod lens 61, so that when an optical fiber is inserted into the guide hole 61c, collimated light can be obtained. In other words, the light transmitting the optical fiber 11 is emitted from the end surface of the optical fiber 11, which is fixed in the guide hole 61c formed in the aspherical rod lens 61. After the light transmits in the aspherical rod lens 61, the light is converted into collimated light by the aspherical surface of the second surface 61b of the rod lens. Thus, as compared with the conventional art, the aspherical rod lens according to the fourth embodiment is easy to assemble and provides collimated light over a long distance.

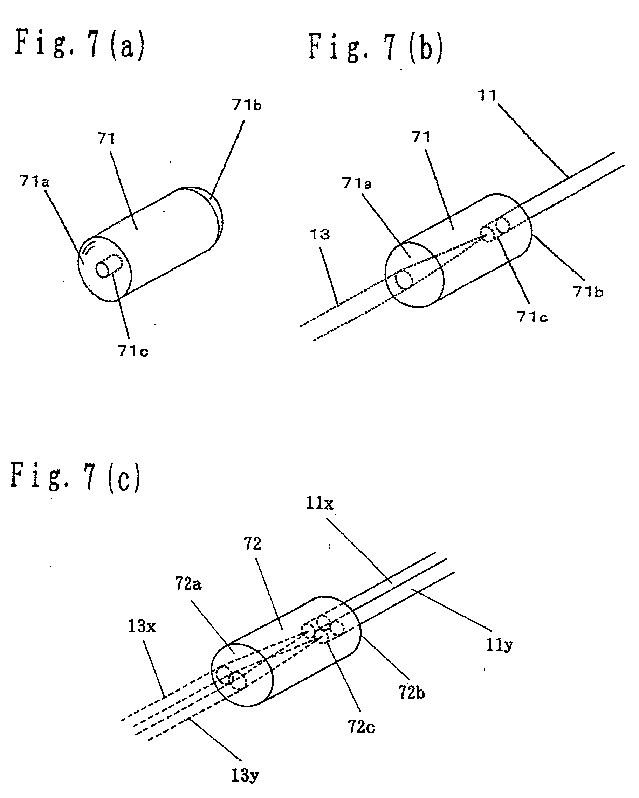

FIGS. 7A-7C are perspective views of these aspherical rod lenses.

FIG. 7A is a view as seen from an incidence side. FIG. 7B is a view as seen from an emittance side. FIG. 7C will be described later.

As shown in FIG. 7B, the light emitted from the end surface of the optical fiber 11, inserted into the guide hole 71c, is converted into collimated light by the aspherical rod lens 71.

As described above, forming a guide hole for fixedly supporting an optical fiber makes the assembly operation easy without having to adjust the optical axes of optical fibers to be in line with the aspherical rod lens at low cost. FIG. 6B shows the shape of the guide hole as seen from the first surface. While the guide hole is a circular cylindrical shape but can be other shapes such as a triangular prism, and a quadrangular prism and a polygonal prism as shown in FIG. 6C as long as the optical fiber can be supported.

The diameter of the guide hole need not be 250 microns which is the same as the diameter of an optical fiber. The diameter can be much smaller, for example, 125 microns, or much larger, for example, 0.5 mm and 0.9 mm.

As shown in FIGS. 6D and 6E, the aspherical rod lens may be formed with a guide hole therein that receive two optical fibers. Two guide holes 63c may be formed side by side as shown in FIG. 6D. Alternatively, the guide hole 64c may be a single hole in which two optical fibers may be inserted together. Still alternatively, a plurality of guide holes may be formed so that optical fiber array can be inserted and fixed therein.

As described above, a device in which two optical fibers are fixed to form collimator lens do not exist in the conventional art. This configuration may be applied to a hybrid optical isolator, an optical circulator, an optical switch, an optical fiber amplifier, and a light attenuator, and provides optically functioning devices that are important in the optical communication systems. The present invention is readily applicable to the manufacture of a DCF.

Conventional dual fiber collimators (DCF) are of a configuration in which two optical fibers are in contact with the first surface. The conventional dual fiber collimators have no guide hole formed in the lens as opposed the present invention.

FIG. 7C is a perspective view of an aspherical rod lens for a DCF according to the present embodiment. FIG. 7C clearly shows that the light emitted from the end surface of the two optical fibers 11x and 11y inserted into a guide hole 72c is converted into collimated light 13x and 13y, respectively, by an aspherical rod lens 71. The two optical fibers 11x and 11y are spaced apart by a distance of, for example, 125 $\mu$m or 250$\mu$m. For a distance equal to or less than 250$\mu$m, even if the aspherical shape of an emittance end surface 72a of the aspherical rod lens 72 is the same as that of aspherical shape of the emittance surface 71a of the single fiber collimator 71, good collimated light can be obtained. When a plurality of optical fibers are inserted into the guide hole formed in the aspherical rod lens and spaced apart at intervals of more than 250$\mu$m, it is desirable to deign an aspherical micro lens array having an aspherical shape of a free curved surface so that a center axis of the guide hole is in line with an optical axis of the fiber.

Here, while the light source of the embodiment has been described with respect to an optical fiber, collimated light and a converged light beam can also be produced by using an aspherical rod lens having a guide hole if the light source is a semiconductor laser or a surface emission laser that can be housed in the guide hole.

As described above, providing a guide hole eliminates the need for adjusting optical axes even when a plurality of optical fibers and a tape-shaped multi-core optical fiber, thereby allowing easy and accurate fixing of the optical fibers at predetermined intervals. This implements, for example, a low cost DCF.

Here, the embodiment has been described with respect to a fiber-fixing technique in which a guide hole is formed in the first surface of the lens and a plurality of optical fibers are fixed. The structure is not limited to this, but for example, a hole similar to the above-described guide hole may be made in a glass material in the shape of a block other than a lens, and a plurality of optical fibers or a tape-shaped multi-core fiber may be fixed to form an optical fiber array.

(Fifth embodiment)

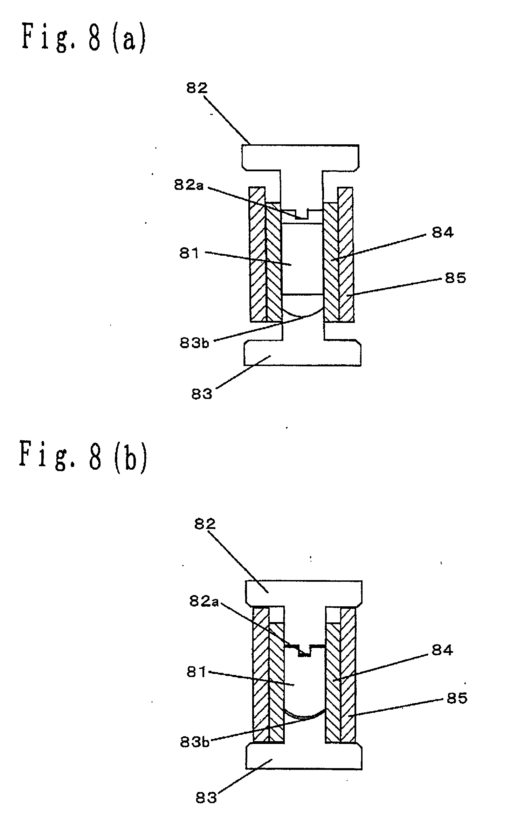

A method of manufacturing an aspherical rod lens with an optical fiber guide will be described with reference to FIGS. 8A and 8B. FIGS. 8A and 8B illustrate the manufacturing stages of an aspherical rod lens.

The method of manufacturing an aspherical rod lens according to a fifth embodiment differs from that of the second embodiment in FIGS. 2A and 2B in that as shown in FIGS. 8A and 8B, the upper mold 82 made of tungsten carbide has a projection 82a by which a guide hole is formed.

As described above, providing a projection on the surface of the mold allows making an aspherical rod lens having a guide hole in one piece construction.

Technically important is the method of forming a projection having a diameter of , for example, 125 µm or 250 µm on a mold made of tungsten carbide having high hardness. In order to accurately form a projection on a mold, micro electric discharge machining was employed.

Micro electric discharge machining is capable of forming a projection having a diameter of 125µm and 250µm on the surface of the mold. The projection is preferably formed into a circular cylinder for ease of machining, but may be formed into a triangular prism, a quadrangular prism, or a polygonal prism.

A plurality of projections may be formed side by side instead of only one projection.

Moreover, a plurality of projections may be formed on a mold so that guide holes are formed in the first surface of an aspherical rod lens, thereby forming an optical fiber array.

For example, if two projections for making guide holes are formed on the upper mold that defines the first surface of an aspherical rod lens, or a projection large enough for accommodating two holes as shown in FIG. 6E is formed on the upper mold, two optical fibers may be fixed side by side in the first surface of the molded aspherical rod lens, thereby implementing a dual fiber collimator.

The mold used requires to have a projection having a width equivalent to two cylinders with a diameter of 125 µm and a height in the range of 500 µm to 5 mm so that optical fibers can be inserted into thus formed hole. In the present invention, the mold was machined to provide the projection by using micro electric discharge machining which is capable of micro-machining. The use of micro machining allows accurate machining the details of a cemented mold and makes it possible to provide a mold having a plurality of projections.

As described above, the method of manufacturing an aspherical rod lens according to the fifth embodiment allows an aspherical rod lens to be mass-produced at low cost with high manufacturing efficiency.

(Sixth embodiment)

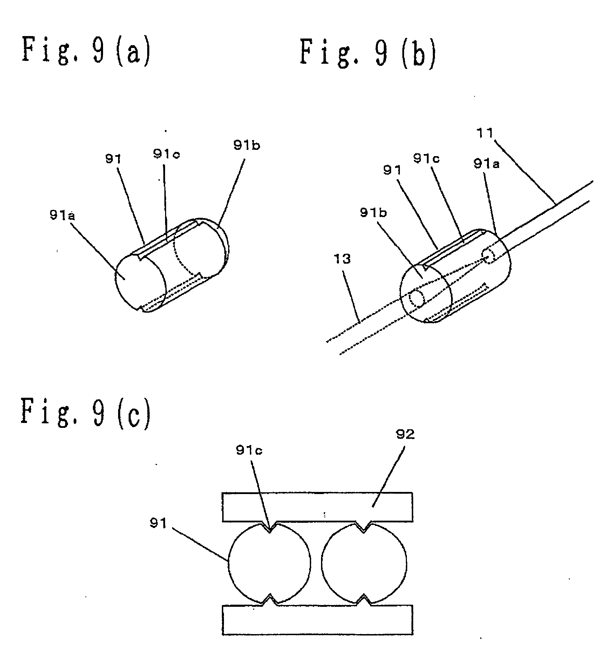

An embodiment of an aspherical rod lens according to the present invention shown in FIGS. 9A-9C will be described.

FIGS. 9A and 9B are perspective views illustrating an aspherical rod lens 91.

FIG.9A is a view as seen from an incidence side. FIG.9B is a view as seen from an emittance side. The aspherical rod lens 91 differs from the aspherical rod lens in FIG. 1 in that a pair of grooves 91c is provided on the side surface of the aspherical rod lens 91. The lens operates in such a way that the light emitted from the optical fiber 11, butt-joined to a first surface 91a of the aspherical rod lens 91, passes through the aspherical rod lens 91 and is refracted by the second surface 91b into collimated light 13.

As shown in FIG. 9C, the pair of grooves 91c are useful in positioning the rod lens to a fixing plate 92 in an optically functioning device. The pair of grooves 91c allow easy fixing of the rod lens during the assembly work, and positioning of the aspherical rod lens at low cost.

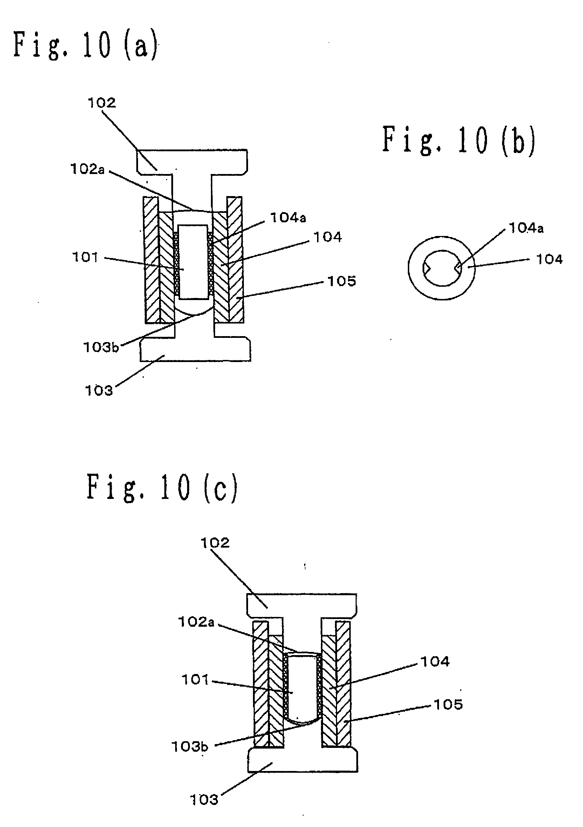

Amethod of manufacturing this aspherical rod lens having a groove will be described with reference to FIGS. 10A-10C.

FIGS. 10A-10C illustrate the manufacturing stages of the aspherical rod lens.

The method of manufacturing an aspherical rod lens according to the present invention differs from that of the second embodiment shown in FIG. 2 in that triangular projections 104a for forming grooves are provided on an inner surface of the blow mold 104 made of tungsten carbide as shown in FIG. 10B. Providing the triangular projections in a mold that defines the outer contour of the aspherical rod lens allows easy formation of an aspherical rod lens having grooves. One way of forming the grooves in the aspherical rod lens is precision grinding. However, forming grooves on the side surface by molding as in the present embodiment provides the positioning grooves at very low cost.

While the mold used in the sixth embodiment has triangular projections for forming grooves, the projections may be a semi-cylinder or merely raised portions. For smooth release of the molded object from the mold, the grooves should not be formed all across the entire length of the mold but may be formed only in limited parts on the outer contour, for example, near the first surface and second surface.

(Seventh embodiment)

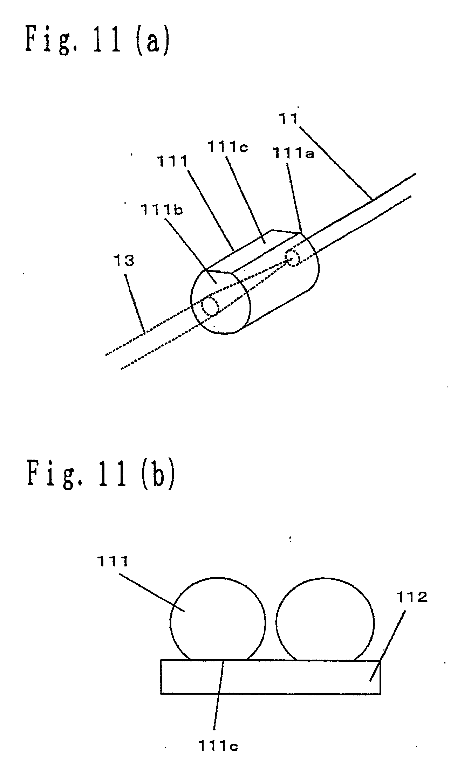

An embodiment of an aspherical rod lens according to the present invention will be described with reference to FIGS. 11A and 11B.

The seventh embodiment differs from the aspherical rod lens of the first embodiment in FIG. 1 in that the aspherical rod lens is not cylindrical but the side surface includes a flat portion 111c.

The lens of the seventh embodiment will operate as follows: The light emitted from the optical fiber 11, which is butt-joined to a first surface 111a of an aspherical rod lens 111, passes through the aspherical rod lens 111 and is refracted by the second surface 111b into collimated light 13.

As described above, providing the flat portion 111c on a part of the aspherical rod lens allows the aspherical rod lens to be positioned with respect to a fixing plate 112 in an optically functioning device. The structure facilitates positioning of the lens especially in a direction of height. By aligning a plurality of aspherical rod lenses 111, a collimator lens array and optical fiber collimator array can be configured.

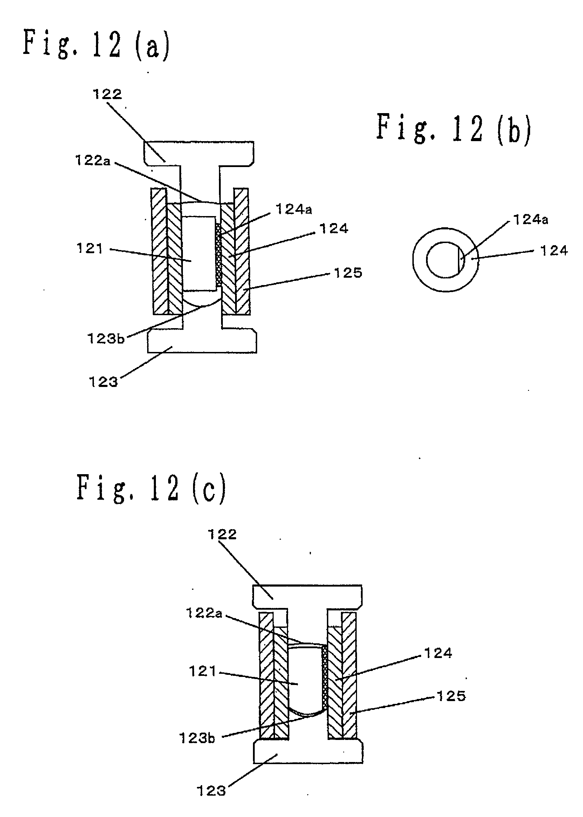

The method of manufacturing an aspherical rod lens having a flat portion will be described with reference to FIGS. 12A-12C.

FIGS. 12A-12C illustrate the manufacturing stages of the aspherical rod lens.

The manufacturing method of the aspherical rod lens according to the seventh embodiment differs from the second embodiment in FIG. 2 in that as shown in FIG. 12B, the blow mold 124 made of tungsten carbide has a flat portion 124a. As described above, providing a flat portion on a part of the mold that defines the contour of the aspherical rod lens allows easy manufacturing of an aspherical rod lens having a flat portion.

Forming a flat portion on the side surface of the lens by molding as in the present embodiment provides a positioning surface of the lens at very low cost.

(Eighth embodiment)

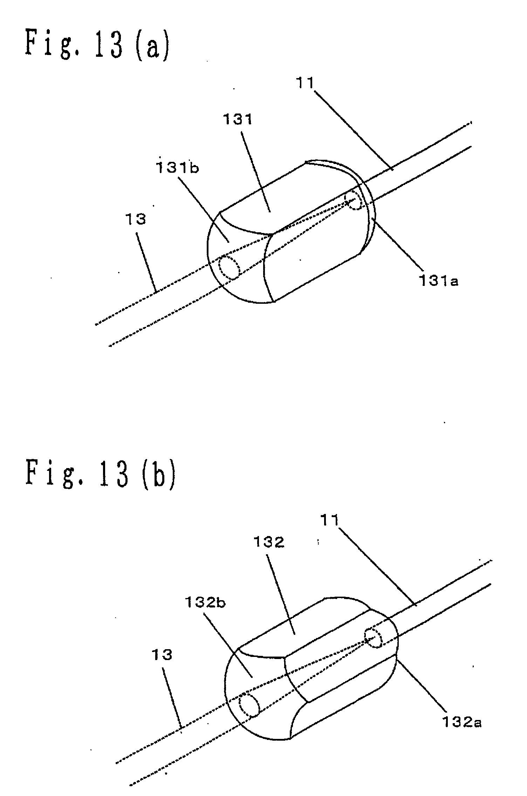

An embodiment of an aspherical rod lens according to the present invention will be described with reference to FIGS. 13A and 13B.

The eighth embodiment differs from the aspherical rod lens according to the first embodiment in FIG. 1 in that the aspherical rod lens is not a cylinder but a polygonal prism such as a quadrangular prism and a hexagonal prism

FIG. 13A illustrates an aspherical rod lens 131 in the shape of a quadrangular prism. FIG. 13B illustrates an aspherical rod lens 132 in the shape of a hexagonal prism. The lens operates as follows: The light emitted from the optical fiber 11 which is butt-joined to the first surfaces 131a and 132a of aspherical rod lenses 131 and 132, respectively, passes the aspherical rod lenses 131 and 132 and is then refracted by the second surfaces 131b and 132b, respectively, into collimated light.

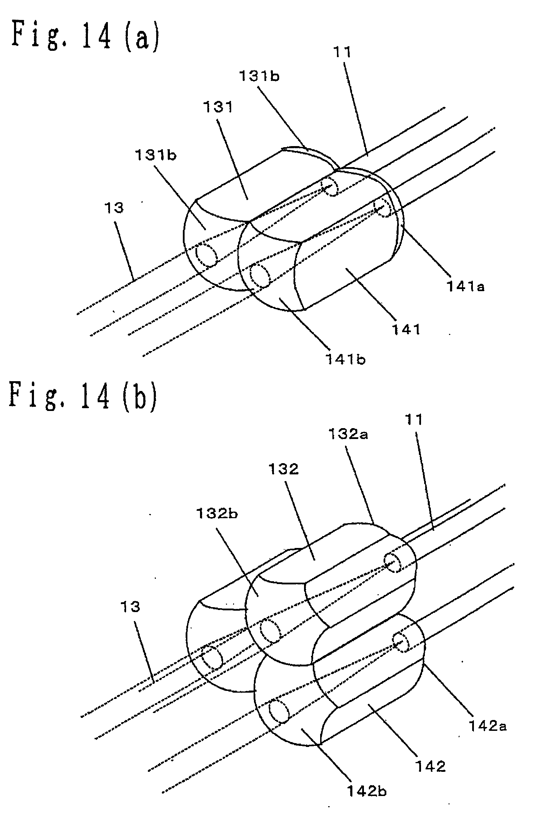

The shape of a quadrangular prism and a hexagonal prism allows a plurality of aspherical rod lenses to be stacked, thereby facilitating manufacture of an optical collimator array. FIGS. 14A and 14B illustrate the eight embodiment.

FIG. 14A illustrates two quadrangular prism-shaped aspherical rod lenses 131 and 141 aligned side by side by taking advantage of their side surfaces. FIG. 14B illustrates three hexagonal prism-shaped aspherical rod lenses 132 and 142 aligned by taking advantage of their side surfaces, so that their optical axes are parallel.

The thus manufactured aspherical rod lens array advantageous in that the distance between the optical axes of lenses can be set accurately, thereby setting the distance between the optical axes of the light beams accurately. Consequently, a collimator lens array and an optical fiber collimator array can be configured readily.

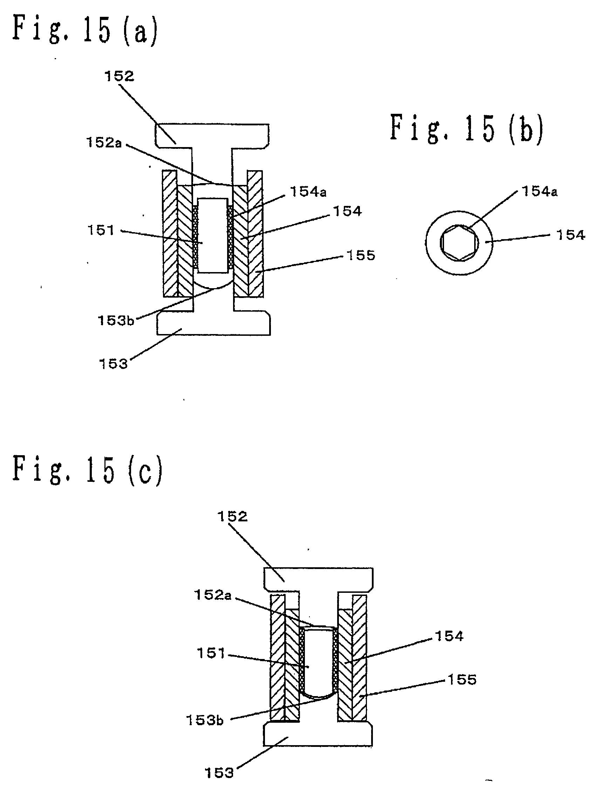

FIGS. 15A-15C illustrate the method of manufacturing an aspherical rod lens in the shape of the aforementioned polygonal prism.

FIGS. 15A-15C illustrate the manufacturing stages of an aspherical rod lens.

The method of manufacturing an aspherical rod lens according to the eighth embodiment differs from the second embodiment in that a blow mold 154 made of tungsten carbide has a hexagonal portion 154a as shown in FIG. 15B.

As described above, providing the hexagonal portion on a part of the mold that defines the outer contour of an aspherical rod lens allows an aspherical rod lens to have a flat portion of a hexagonal prism.

In order to facilitate release of the mold, the blow mold 154 may be a two-part mold that has two halves. As in the present, forming flat surfaces to define a shape of a polygonal prism by molding allows forming of the positioning surfaces of the lens at low cost and accurate manufacturing of the lens array.

The guide hole for guiding a single or a plurality of optical fibers shown in FIGS.6A to 8B may be formed in the asperical rod lens shown in, for example, FIGS.9 to 15C.

(Ninth embodiment)

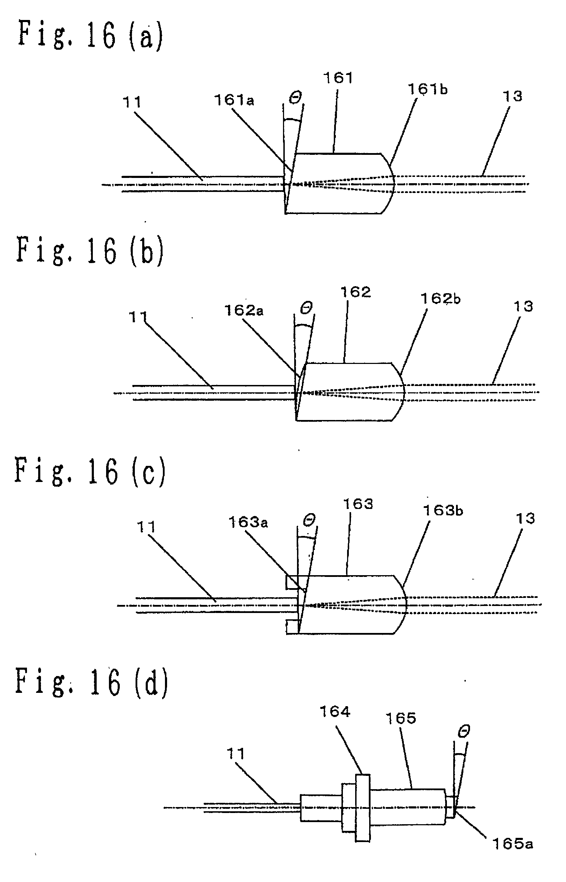

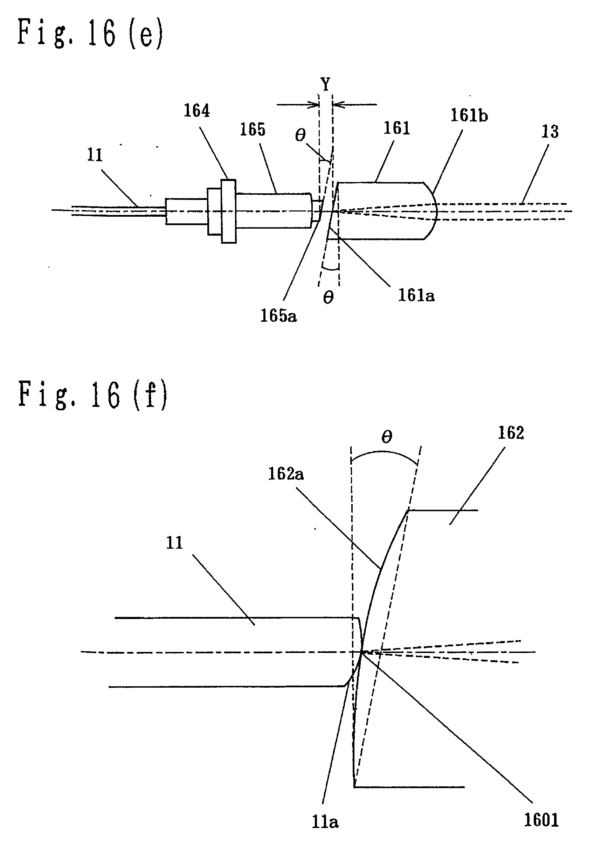

As embodiment of an aspherical rod lens according to the invention in FIGS. 16A-16F will described.

The aspherical rod lens 161 in FIG. 16A includes a first surface 161a formed at an angle with a plane normal to the optical axis, and an aspherical surface second surface 161b.

The first surface 161a is an inclined surface in order to prevent the occurrence of reflected light that returns into the optical fiber 11. The aspherical rod lens is, for example, a very small rod lens having a diameter of 1 mm and a length of 3 mm, and a diameter of 2.5 mm and a length of 4.5 mm.

The angle θ of the first surface is usually in the range of 6 to 8 degrees but can be larger than 8 degrees, for example, 10 degrees and 12 degrees. Therefore, the first surface can be designed to have an angle θ of, for example, 6, 7, 8, 10, and 12 degrees or even larger.

The embodiment inFIG. 16A is a non-contact type aspherical rod lens having the first surface 161a, which is an inclined surface. In contrast, the example in FIG. 16B is a contact type aspherical rod lens in which the first surface is formed in the shape of PC with an inclination angle so that the lens can be PC-connected to a ferrule that has been subjected to APC (Angled Physical Contact).

FIG. 16C illustrates an aspherical rod lens having a part of an inclined first surface. Forming a first surface as shown in FIG. 16C facilitates the physical contact of the lens with a ferrule 164 or an optical fiber that has been polished obliquely as shown in FIG. 16D, and reduces reflection loss when optical connection is made.

Now, the finishing of an end surface of an optional fiber will be described. The finishing of an end surface of an optical fiber includes four types: surface polishing, convex polishing (PC polishing), precision convex polishing (precision PC polishing) and oblique polishing, all being performed after the lens is fixed to a ferrule or a capillary. The surface polishing of an end surface of a connector reduces backward reflection to about -16 dB (4%). The PC polishing, i.e., convex polishing, provides a slightly curved surface which allows physical contact of end surfaces when fiber connectors are coupled to each other.

This minimizes the presence of air having a different refractive index from the lens in the light path, thereby reducing return loss to 30 to 40 dB.

The convex (PC) polishing is a technique for finishing the end surface of a connector, used most often in a variety of applications. The precision convex polishing (advanced PC polishing) includes more stages of polishing in order to further improve the quality of connector end surface and serves to reduce backward reflection to 40 to 55 dB.

These types of polishing are used in high speed digital optical communication systems. The oblique polishing is a technique with the end surface of the optical fiber at an angle with a plane normal to the optical axis of the fiber. An angled PC polishing is a technique in which an optical fiber is PC-polished with the end surface at an angle in the range of 6 to 8 degrees as mentioned above with a plane normal to the optical axis of the fiber. In PC-polishing, too, the cores of optical fibers contact each other and the light is reflected back at an angle with the optical axis, being off the core of another optical fiber. Thus, the return loss is equal to or less than 60 dB.

The embodiment in FIG. 16A has a flat end surface of the optical fiber 11 normal to the optical axis. In order to prevent reflected light return, the optical fiber in FIG. 16D having a PC-polished end surface 165a where the end surface 165a of the optical fiber is at an angle with a plane normal to the optical axis may be combined with the aspherical rod lens in FIG. 16A (refer to FIG. 16E). Alternatively, the optical fiber in FIG. 16D having a PC-polished end surface where the end surface of the optical fiber is at an angle with a plane normal to the optical axis may be combined with the aspherical rod lens in FIG. 16B. Such combinations provide special advantages when applied to the previously described fiber collimator and dual fiber collimator, that is, the inclination angle θ in the range of 6 to 8 degrees in FIGS. 16A-16C facilitates PC connection and reduces reflected light return.

FIG. 16E illustrates the end surface 165a of the optical fiber in FIG. 16D and the first surface 161a of the lens in FIG. 16A that are not in contact with each other but are spaced apart by a desired distance Y. In this case, the aspherical shape is designed such that when the collimated light enters the emittance side of the aspherical rod lens 161, i.e., from right side of the second surface 161b, the light is focused on the end surface 165a of the optical fiber incorporated in the ferrule 165. In other words, it is importance that the aspherical rod lens is designed such that the front side focal point of the second surface 161b of the aspherical rod lens is on the end surface of the optical fiber 165a.

Here, the inclination angle θ of the end surface of the optical fiber may be the same as that of the oblique incidence surface 161a of the aspherical lens but need not be the same, as long as the reflected light return does not travel into the optical fiber. Especially, because the end surface of the optical fiber on the incidence side is commonly polished at 8 degrees, the first surface of an aspherical rod lens to be shaped in accordance with the end surface of the optical fiber is designed to incline at an angle of 4 to 9 degrees.

Generally, there are two types of parallel rays : the entire rays emanating from every part of a light source having a finite size are parallel and all rays emanating from an infinitesimally small light source are parallel. It should be noted that since the end surface of an optical fiber and a light source usually have finite sizes and are not an ideal point source, the emitted light from the lens diverges. If light emanating from a light source having a diameter of A and the light is to be converted into parallel rays by a lens having a focal distance of f, the divergence angle of the parallel rays is expressed by A/f in radians. Even if the light beam emanating from one point of the light source can be converted into parallel rays, that parallel rays makes an angle with the light beam emanating from another point, so that the resulting light emitted will diverge. In order to produce a light beam having as small divergence angle as possible using a light source having a finite size, it is important to design a lens having a long focal distance so that if the incident light is a gauss beam just like the light emitted from a semiconductor laser and a single mode fiber, the shape of the second surface of the lens has a beam waist formed at a point as far from the second surface of the lens as possible.

FIG. 16F is an enlarged view of the contact portion of the fiber in FIG. 16B. In this case, the tip 11a of the optical fiber is polished to a surface that makes a predetermined angle with a plane normal to the core optical axis of the polished fiber, i.e., APC (angled physical contact). The end surface 11a of the optical fiber is in contact with an aspherical rod lens 162 that is also formed into a curved surface 162a at an angle θ with a plane normal to the optical axis of the fiber. In this case, the light transmitted through the aspherical rod lens and emitted from the second surface of the lens has been collimated, and the aspherical shape of the second surface, i.e., the emittance surface 162b, is designed to have a front focal point on a part 1601 of the first surface 162a with which the fiber is in contact.

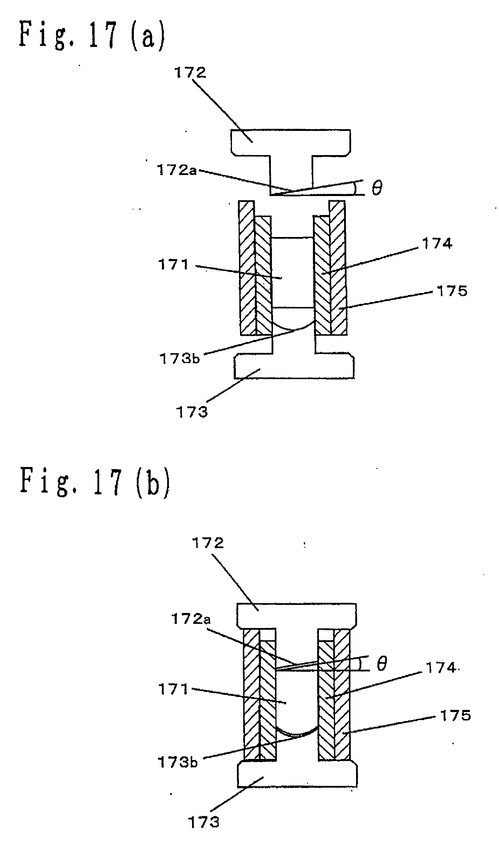

FIGS. 17A and 17B illustrate a method of manufacturing an aspherical rod lens having an inclined first surface.

The method of manufacturing an aspherical rod lens differs from that according to the second embodiment in FIG. 2 in that as shown in FIG. 17A, an upper mold 172 made of tungsten carbide has an inclined surface 172a for defining an inclined surface of the aspherical rod lens.

Providing the inclined surface 172a on a mold allows an aspherical rod lens to easily be molded to have a beveled first surface. An inclined surface can also be made on an aspherical rod lens by precision polishing after forming the aspherical rod lens. However, molding the aspherical rod lens at a single process stage according to the present embodiment allows an aspherical rod lens having an inclined surface to be manufactured at very low cost.

The embodiment facilitates the manufacture of an aspherical rod lens having the first surface of an inclined PC surface in FIG. 16B or having the first surface of a partially inclined surface in FIG. 16C, and allows precise transferring of the aspherical shape of the mold with good repeatability. Thus, the embodiment allows an aspherical rod lens to be mass-produced at low cost with high manufacturing efficiency.

The manufacturing methods described above have used a mold made of tungsten carbide. However, if a lens material is suitable for glass molding, a mold made of, for example, a crystallized glass of low thermal expansion can be used to form an aspherical rod lens.

(Tenth embodiment)

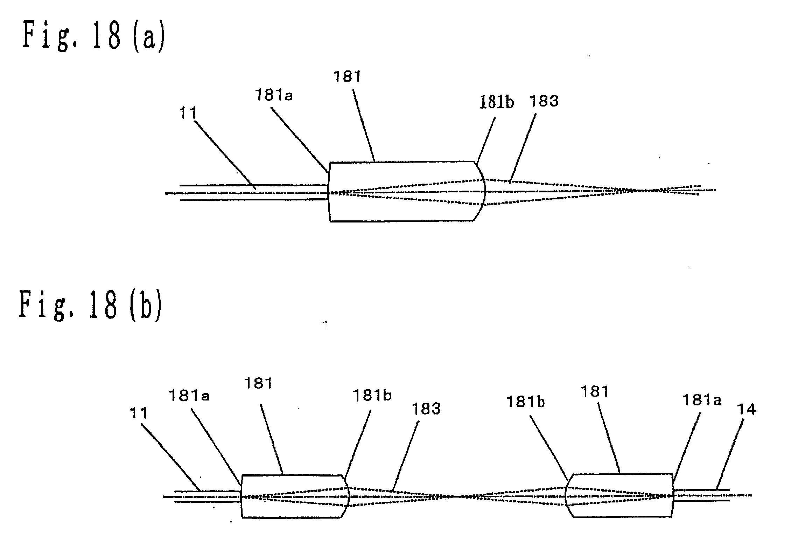

FIG. 18A illustrates an embodiment of an aspherical rod lens according to the present invention.

The aspherical rod lens in FIG. 18A is an aspherical rod lens 181 for converging a light beam.

The tenth embodiment differs from the embodiments that have been described in that an optical coupling system is not in the form of a collimator system but in the form of a converged light beam optical system or a confocal optical system. An optically functioning device is configured often by a collimator optical system but may be configured by using a converged light beam optical system where light is coupled.

FIG. 18A clearly shows that the use of the aspherical rod lens 181 for producing a converged beam allows conversion of the light emitted from the optical fiber 11 into a converged beam 183.

Thus, designing the refraction index, length (thickness), and aspherical shape of an aspherical rod lens allows the aspherical rod lenses described in the previously described embodiments to be used not only as a collimator lens but also as an aspherical rod lens for producing a converged light beam.

Specifically, it is important to design the lens such that the focal point of the second surface 181b is further inside than a position on the first surface 181a with which the emittance end surface of the optical fiber 11 is in contact.

FIG. 18B illustrates an optical coupling system configured with a converged beam optical system. Such a confocal optical system may be used to configure an optical coupling system for an optically functioning device, in which case, the aspherical rod lenses according to the present invention that have been described above may be applied advantageously by modifying the refraction index, length (thickness), and aspherical shape of the lens from a point of view of coupling efficiency, positioning accuracy, and ease of assembly.

(Eleventh embodiment)

While the aspherical rod lenses according to the above-described embodiments have been described with respect to the glass material, careful design and choice of the mold, heating temperature, heating time, amount of lens material, and injection technique allow the use of plastics and resin materials.

If the lens material is to be made of plastics and resin materials, injection molding and injection compression molding can be used to manufacture the aspherical rod lens according to the present invention.

Further, the molding according to the eleventh embodiment may be used to manufacture a press lens, in which case, a mold requires to be released easily from the plastics and resin materials after molding.

The use of a mold made of, for example, a glass material is effective in transferring the aspherical shape accurately.

(Twelfth embodiment)

As described in the first embodiment, setting the refractive index of the lens material for an aspherical rod lens equal to that of the core of the optical fiber provides a decreased reflectivity, which was advantageous in connecting an optical fiber to a lens according to the present invention.

The first embodiment has been described with respect to a refractive index in the range of 1.46 to 1.48 , determined by taking the refractive index of the core of single mode optical fiber into account. Optical glasses may be effectively used in reducing the reflective index, provided that the glasses have refractive indexes close to those of various optical fibers.

Thus, a lens material can be selected to have a substantially the same refractive index as that of the core of an optical fiber that is to be coupled to the lens, thereby molding an aspherical rod lens without difficulty.

As described in the first embodiment, providing an antireflection coating (AR coating) on both surfaces of an aspherical rod lens also reduced insertion loss of the lens, being effective in configuring a high performance optically functioning device.

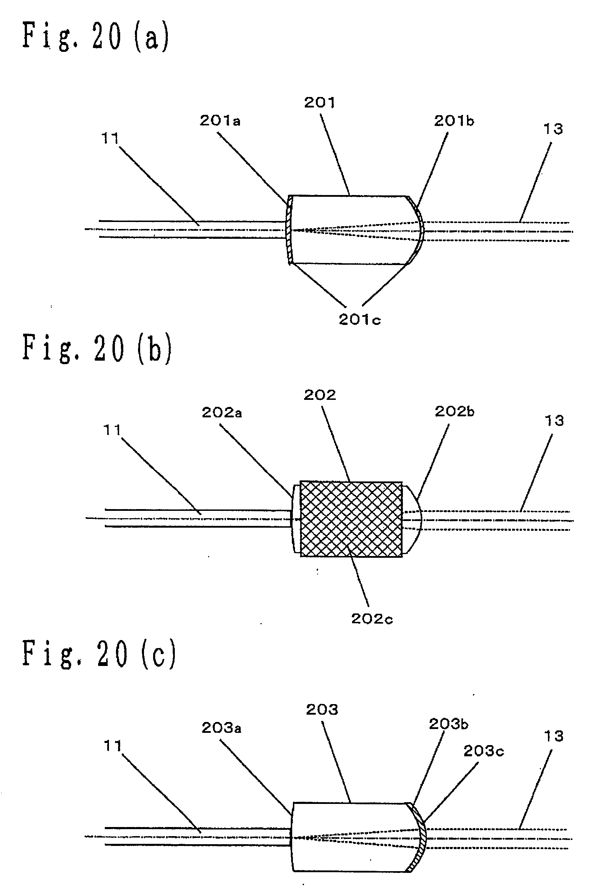

FIG. 20A illustrates an aspherical rod lens having an AR coating applied thereon.

An aspherical rod lens 201 has a first surface 201a and a second surface 201b, both surfaces being coated with AR coatings 201c. When an optically functioning device is to be configured, the aspherical lens side is in contact with a medium having a different refractive index, e.g., air . Thus, applying the AR coating 201c on the aspherical rod lens 201 is particularly effective in reducing reflection loss at the boundary between the lens and the air.

FIG. 20B illustrates metallization process applied to an aspherical rod lens.

In order to fixedly mount the lens on, for example, a fixing substrate, forming a metallized layer (covering layer of metal) 202c on the outer contour (side surface) of the an aspherical rod lens 202 by vapor deposition allows the aspherical rod lens to be easily fixed, providing advantages in the manufacture of the aspherical rod lens, the metallized layer being used for fixing by solder and fixing by junction.

The metallized layer 202c may be coated with an alloy type coating of Ni, as a standard coating material, and Au, Fe, Cu, Ag, and Sn. Ni-Au alloy and Ni-Fe alloy are effective especially for fixing by solder. The metallized layer is particularly advantageous in that the metallized layer need not be formed all over the side surface but need be formed only on a part of the side surface, while still facilitating assembly of the aspherical rod lens.

FIG. 20C illustrates the machining of a wavelength filter applied to an aspherical rod lens.

As is clear from FIG. 20C, the aspherical rod lens 203 has a wave length filter 203c in the form of a dielectric multi-layer that is formed on the second surface from which the light traveled in the optical fiber 11 is emitted.

As described above, forming a wavelength filter on the aspherical rod lens adds a wavelength selecting function to the lens. In the conventional art, when forming a wavelength filter as an optically functioning device, a pair of optical fiber collimator and an optical filter require to be assembled together. However, the use of an aspherical rod lens having the wavelength filter eliminates a separate optical filter and simplifies the assembly operation, thereby miniaturizing the wavelength filter.

Usually, the wavelength filter includes more than one material having different optical properties (refractive index) laminated one over the other, the laminated structure controlling the transmission characteristics of light wave.

Each layer is usually designed to provide a light path (=refractive index $\times$ thickness $\times$ cos (incidence angle) ) of a quarter wavelength of the light that passes through the layer.

A wavelength filter is manufactured using the material of the dielectric multi-layer film that includes $TiO_2$, $Ta_2O_5$, $ZrO_2$, and $Nb_2O_3$ as a high refractive index material and $SiO_2$ as a low refractive index material, and $Al_2O_3$ as an intermediate substance.

For example, vapor deposition, sputtering, and chemical vapor deposition may be used. In the present embodiment, the wavelength filter was made by dual ion beam sputter (DIBS) to while monitoring the optical characteristics.

If a wavelength filter is applied to an aspherical rod lens, which has a small length (thickness) and a small diameter e.g., 2 mm $\phi$ or less, emits a light beam that has a small diameter and is refracted in a region near the optical axis. For this reason, the emitted beam is not seriously affected by aberration and is not dependent on the incidence angle of the light beam entering the wavelength filter. Thus, the embodiment is particularly advantageous in applications to, for example, a wavelength division multiplexing optical filter.

(Thirteen embodiment)

Embodiments of an aspherical rod lens have been described with respect to an optical fiber as light-inputting means. A light source such as semiconductor laser (LD) , LED, surface emitting laser (VCSEL) , may be used in place of optical fibers.

It should be noted that a light source in the form of an LD has a different numerical aperture (NA) through which light is emitted and therefore the aspherical lens requires to have an optimum aspherical shape different from those for the optical fibers.

As described above, the aspherical rod lens according to the present invention is free from aberration, facilitates adjustment of the optical axis, and provides good collimation and convergence of light beam. In other words, collimated light extends over a long distance, or a convergence light beam optical system can be configured without difficulty. Thus, the aspherical rod lens according to the present invention provides a lens that offers an excellent coupling efficiency in the optical coupling system.

In addition, lens array and optical fiber collimator array can be configured without difficulty, thereby providing a lens and a method of manufacturing the lens that can implement a low cost, high performance, and miniaturized optically functioning device.

The aspherical rod lens according to the invention can be applied to optical coupling, optical signal processing, and light beam conversion, in the fields of not only optical communications but also of optical circuit elements-mounted substrates, an image information processing apparatus, and a liquid crystal display apparatus.

The aforementioned embodiments have been described primarily with respect to cases in which an aspherical rod lens converts the light emitted from an optical fiber into collimated light or a converged light beam. The invention is not limited to these embodiments. The invention may be applied to a configuration where a light source takes the form of, for example, a surface emitting laser, and still provides the same advantages and effects as those described above.

The aforementioned configuration can implement an aspherical rod lens having a high coupling efficiency in an optical coupling system, and provides a method of mass-producing an aspherical rod lens at very low cost. Moreover, the aforementioned configuration facilitates smooth coupling of an aspherical rod lens with an optical fiber, implementing miniaturization, array form, high performance of optically functioning devices.

As is clear from the above description, the present invention provides an aspherical rod lens having a high coupling efficiency in the optical coupling systems and a method of manufacturing such an aspherical rod lens.

**Claims**

1. An aspherical rod lens that converts light emitted from a predetermined light source or an emittance end of an optical fiber into predetermined light, the aspherical rod lens comprising:

   a first surface having either a spherical surface or a flat surface with which either the light source or the emittance end is in contact; and
   a second surface that substantially opposes said first surface, said second surface having an aspherical shape through which the light emitted from either the light source or the optical fiber passes, said second surface converting the light into either collimated light or a converged light beam.

2. The aspherical rod lens according to claim 1, wherein said first surface is in contact with the emittance end of the optical fiber and the light that has passed said second surface is the collimated light;
   wherein the second surface has a focal point on said first surface at a position with which the emittance end is in contact.

3. The aspherical rod lens according to claim 1, wherein said first surface is in contact with the emittance end of the optical fiber and the light that has passed said second surface is the converged beam;
   wherein the second surface has a focal point located further inside of the rod lens than a position on said first surface with which the emittance end is in contact.

4. The aspherical rod lens according to claim 2 or claim 3, wherein the aspherical rod lens is of a substantially cylindrical shape having a predetermined outer diameter which is substantially the same as a diameter of a ferrule that holds the optical fiber bonded to the ferrule.

5. A method of manufacturing an aspherical rod lens according to claim 1, the method including:

   a first stage in which a lens material is heated to a predetermined temperature at which the material has plasticity;
   a second stage in which the heated lens material is formed into a lens shape under pressure by using a mold;
   a third stage in which two lens surfaces are formed while pressurizing the lens material and cooling the lens material from the predetermined temperature to a transition point; and
   a fourth stage in which the molded lens material is cooled to a temperature below the transition point.

6. An aspherical rod lens that converts light emitted from a predetermined light source or an emittance end of an optical fiber into predetermined light, the aspherical rod lens comprising:

   a first surface having a guide hole into which either a plurality of the light sources or emittance ends of a plurality of the optical fibers should be inserted;
   a second surface that substantially opposes said first surface, a second surface having an aspherical shape through which the light emitted either from the light sources or the optical fibers passes, said second surface converting the light into either collimated light or a converged light beam.

7. The aspherical rod lens according to claim 6, wherein the light that has passed said second surface is the collimated light;

wherein the second surface has a focal point substantially at a bottom of the guide hole.

8. The aspherical rod lens according to claim 6, wherein the light that has passed said second surface is the converged light;

wherein the second surface has a focal point positioned at a location further inside of the lens than a bottom of the guide hole.

9. The aspherical rod lens according to claim 7, wherein the guide hole is formed so that emittance ends of two parallel optical fibers are inserted into it to form a dual fiber collimator.

10. A method of manufacturing an aspherical rod lens according to claim 6, the method including:

a first stage in which a lens material is heated to a predetermined temperature at which the material has plasticity;
a second stage in which the heated lens material is shaped into a lens under pressure by using a mold;
a third stage in which two lens surfaces are formed while pressurizing the lens material and cooling the lens material from the predetermined temperature to a transition temperature; and
a fourth stage in which the molded lens material is cooled to a temperature below the transition temperature;

wherein the mold for forming the first surface has a projection for forms the guide hole.

11. The aspherical rod lens according to claim 1 or claim 6, wherein the contour of the aspherical rod lens is substantially in the shape of a cylinder and has a groove or a flat portion formed in a cylindrical surface of the cylindrical shape.

12. An outer surface aspherical rod lens according to claim 1 or claim 6, wherein the aspherical rod lens is substantially in the shape of a polygonal prism.

13. The method of manufacturing an aspherical rod lens according to claim 5 or 10, wherein the mold has a substantially circular cylindrical inner surface that corresponds to an outer surface of the aspherical rod lens, the circular cylindrical inner surface having a projection for forming a groove in the aspherical rod lens and a flat portion for forming a flat portion on the aspherical rod lens.

14. The method of manufacturing an aspherical rod lens according to claim 5 or 10, wherein the mold has a substantially polygonal prism that corresponds to an outer surface of the aspherical rod lens.

15. An aspherical rod lens that converts light emitted from either a predetermined light source or an emittance end of an optical fiber into predetermined light, the aspherical rod lens comprising:

a first surface upon which the light emitted from either the light source or the emittance end is incident, said first surface being at an inclination angle with a plane normal to an optical axis of the light incident upon said first surface;
a second surface having an aspherical shape through which the light incident upon said first surface passes, said second surface converting the light into either collimated light or a converged light beam and emitting either the collimated light or the converged light beam.

16. The aspherical rod lens according to claim 15, wherein said first surface is spaced apart from the emittance end of the optical fiber.

17. The aspherical rod lens according to claim 16, wherein the light emitted from said second surface is the collimated light and said second surface has a focal point located on the emittance end of the optical fiber.

18. The aspherical rod lens according to claim 15, wherein said first surface is in contact with the emittance end of the optical fiber.

19. The aspherical rod lens according to claim 18, wherein said first surface is either a spherical or aspherical, and the emittance end of the optical fiber is any one of (1) flat, (2) spherical, and (3) aspherical shapes, the emittance end of the optical fiber being inclined to correspond to the inclination angle.

20. The aspherical rod lens according to claim 19, wherein the light emitted from said second surface is the collimated light and said second surface has a focal point located on said first surface at a position where the emittance end contacts said first surface.

21. The aspherical rod lens according to claim 19, wherein the light emitted from said second surface is the converged light and said second surface has a focal point located further inside of the lens than said first surface.

22. The aspherical rod lens according to claim 15, wherein the inclination angle is any one of 6 degrees, 8 degrees, and 12 degrees.

23. A method of manufacturing an aspherical rod lens according to claim 15, including:

a first stage in which a lens material is heated to a predetermined temperature at which the material has plasticity;
a second stage in which the heated lens material is formed into a lens shape under pressure by using a mold;
a third stage in which two lens surfaces are formed while pressurizing the lens material and cooling the lens material from the predetermined temperature to a transition point; and
a fourth stage in which the molded lens material is cooled to a temperature below the transition point;

wherein the mold for forming the first surface being at an inclination angle with a plane normal to the optical axis.

24. The aspherical rod lens according to claim 1, claim 6, or claim 15, wherein a lens material of the aspherical rod lens has a same refractive index as a core of the optical fiber.

25. The aspherical rod lens according to claim 1, claim 6, or claim 15, wherein said first surface and said second surface of the aspherical rod lens are coated for anti-reflection.

26. The aspherical rod lens according to claim 1, claim 6, or claim 15, wherein the aspherical rod lens has a metal thin film applied to its outer surface.

27. The aspherical rod lens according to claim 1, claim 6, or claim 15, wherein said second surface of the aspherical rod lens has a wavelength filter formed thereon.

28. The aspherical rod lens according to claim 1, claim 6, or claim 15, wherein a lens material of the aspherical rod lens is either a glass material or a resin material.

29. A method of manufacturing an aspherical rod lens, comprising the steps of:

a) positioning a glass rod in a blow mold, the blow mold including a first opening and a second opening opposite the first opening;
b) heating the glass rod above a predetermined temperature at which the glass rod becomes plastic;
c) sliding a first mold, having a first shaped end portion, into the first opening of the blow mold;

d) sliding a second mold, having a second shaped end portion, into the second opening of the blow mold, the second shaped end portion of the second mold having a concave aspherical shape;
e) compressing the heated glass rod between the first shaped end portion of the first mold and the second shaped end portion of the second mold and forming the aspherical rod lens; and
f) cooling the aspherical rod lens below the predetermined temperature, wherein:

the first shaped end portion of the first mold has a concave spherical shape or a flat surface.

30. A method of manufacturing an aspherical rod lens , comprising the steps of:

a) positioning a glass rod in a blow mold, the blow mold including a first opening and a second opening opposite the first opening;
b) heating the glass rod above a predetermined temperature at which the glass rod becomes plastic;
c) sliding a first mold, having a first shaped end portion, into the first opening of the blow mold;
d) sliding a second mold, having a second shaped end portion, into the second opening of the blow mold, the second shaped end portion of the second mold having a concave aspherical shape;
e) compressing the heated glass rod between the first shaped end portion of the first mold and the second shaped end portion of the second mold and forming the aspherical rod lens; and
f) cooling the aspherical rod lens below the predetermined temperature, wherein:

the first shaped end portion of the first mold has at least one projection; and
step (e) further includes the step of compressing the glass rod against the projection of the first shaped end portion of the first mold and forming at least one guide hole in the asperical rod lens.

31. The method of manufacturing an aspherical rod lens according to claim 29 or 30, wherein:

the interior surface of the blow mold includes a triangular or flat portion along a portion of the length of the interior surface; and
step (e) further includes the step of compressing the glass rod against the triangular or flat portion of the interior surface of the blow mold and forming an indicia on the asperical rod lens.

**32.** The method of manufacturing an aspherical rod lens according to claim 29 or 30, wherein:

an interior surface of the blow mold has a polygonal prism shape with a predetermined polygon cross-section;
the first opening of the blow mold has the predetermined polygon shape; and
the second opening of the blow mold has the predetermined polygon shape.

**33.** A method of manufacturing an aspherical rod lens, comprising the steps of:

a) positioning a glass rod in a blow mold, the blow mold including a first opening and a second opening opposite the first opening;
b) heating the glass rod above a predetermined temperature at which the glass rod becomes plastic;
c) sliding a first mold, having a first shaped end portion, into the first opening of the blow mold;
d) sliding a second'mold, having a second shaped end portion, into the second opening of the blow mold, the second shaped end portion of the second mold having a concave aspherical shape;
e) compressing the heated glass rod between the first shaped end portion of the first mold and the second shaped end portion of the second mold and forming the aspherical rod lens; and
f) cooling the aspherical rod lens below the predetermined temperature, wherein:

the blow mold has a longitudinal axis corresponding to an optical axis of the aspherical rod lens; and
a normal of a surface of the first shaped end portion of the first mold forms a predetermined angle with the longitudinal axis of the blow mold.

# Fig. 1

# Fig. 2 (a)

# Fig. 2 (b)

Fig. 3

Fig. 4

EP 1 298 459 A2

Fig. 5

# Fig. 6 (a)

# Fig. 6 (b)

# Fig. 6 (c)

# Fig. 6 (d)

# Fig. 6 (e)

Fig. 7 (a)

Fig. 7 (b)

Fig. 7 (c)

Fig. 8 (a)

Fig. 8 (b)

Fig. 9 (a)

Fig. 9 (b)

Fig. 9 (c)

Fig. 10 (a)

Fig. 10 (b)

Fig. 10 (c)

Fig. 11 (a)

Fig. 11 (b)

Fig. 12 (a)

Fig. 12 (b)

Fig. 12 (c)

Fig. 13 (a)

Fig. 13 (b)

Fig. 14 (a)

Fig. 14 (b)

# Fig. 15 (a)

# Fig. 15 (b)

# Fig. 15 (c)

Fig. 16 (a)

Fig. 16 (b)

Fig. 16 (c)

Fig. 16 (d)

Fig. 16 (e)

Fig. 16 (f)

Fig. 17 (a)

Fig. 17 (b)

Fig. 18 (a)

Fig. 18 (b)

EP 1 298 459 A2

# Fig. 19 (a)

# Fig. 19 (b)

△ CONVENTIONAL DOUBLE CONVEX LENS
□ CONVENTIONAL GRIN LENS
○ ASPHERICAL ROD LENS

Fig. 20 (a)

Fig. 20 (b)

Fig. 20 (c)

# Fig. 21 (a) PRIOR ART

# Fig. 21 (b) PRIOR ART

# Fig. 21 (c) PRIOR ART